(19)

Europäisches
Patentamt
European
Patent Office
Office européen
des brevets

(11)     **EP 4 494 596 A1**

(12)                            **EUROPEAN PATENT APPLICATION**

(43) Date of publication:
   **22.01.2025  Bulletin 2025/04**

(21) Application number: **23186237.6**

(22) Date of filing: **18.07.2023**

(51) International Patent Classification (IPC):
   **A61C 5/77** *(2017.01)*        **A61C 13/00** *(2006.01)*
   **A61C 13/08** *(2006.01)*

(52) Cooperative Patent Classification (CPC):
   **A61C 13/0004; A61C 5/77;** A61C 13/08

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(71) Applicant: **Promaton Holding B.V.**
   **1017 AZ Amsterdam (NL)**

(72) Inventors:
   • **Marzban, Shabbir**
     **1017 AZ AMSTERDAM (NL)**

   • **Schoep, Julian**
     **1017 AZ AMSTERDAM (NL)**
   • **Baka, Nóra**
     **1017 AZ AMSTERDAM (NL)**
   • **Hrybov, Dmytro**
     **1017 AZ AMSTERDAM (NL)**
   • **Török, Ágoston**
     **1017 AZ AMSTERDAM (NL)**

(74) Representative: **De Vries & Metman**
   **Overschiestraat 180**
   **1062 XK Amsterdam (NL)**

(54)    **AUTOMATIC GENERATION OF A CROWN SHAPE FOR A DENTITION**

(57)     Methods and systems for automatic generation of a crown shape for a dentition are described wherein the method comprises segmenting 3D maxillofacial data comprising the dentition, preferably by one or more trained deep neural networks, into a set of 3D dental objects; determining or receiving a position of a tooth, preferably based on a tooth classifier, in the dentition for which a target crown shape is to be determined; determining 3D spatial constraints for the target crown shape based on the set of 3D dental objects; determining an initial pose based for the target crown shape based on one or more 3D dental objects of the set of 3D dental objects; and, optimizing one or more optimization parameters associated with a digital crown shape model to determine the target crown shape, the optimizing including determining a trial crown shape using the digital crown shape model and the one or more optimization parameters, computing a loss value for the trial crown shape based on the 3D spatial constraints and the initial pose; and, if the loss value does not meet one or more optimization conditions modifying the one or more optimization parameters to determine a further trial crown shape and to compute a further loss value.

Fig. 5

**Description**

Technical field

The disclosure relates to automatic generation of a crown shape for a dentition, and in particular, though not exclusively, to methods and systems for automatic generation of a crown shape for a dentition and a computer program product for executing such methods.

Background

With the advances of digital technology parts of the process of producing a crown have been automated using digital equipment such as an intra-oral scanner (IOS) for generating a 3D intra-oral scan of a dentition and dental design software. Such software may assist a person with domain knowledge to create a digital design of a crown shape, which can be used in a computer-aided manufacturing process such as 3D printing or numerically controlled milling.

Accurate fully automatic design of a digital representation of a crown shape for a tooth that is missing from a dentition based on 3D maxillofacial data is a highly complex process. To that end, dental restoration schemes have been suggested based on machine learning. For example, US2022/0296344 and WO2022/016294 describe a dental restoration system comprising a model that is trained using historical training data representing a 3D maxillofacial structure of a dentition to generate a digital crown shape for the missing tooth. Training a crown shape model requires large amounts of annotated 3D maxillofacial data sets to train a neural network to generate a crown shape. Additionally, these models rely on locations in a dentition that already include an abutment or a preparation that is fixated by a screw in the jaw of a patient. Hence, these models also rely on other information, such as the pose of the abutment, than the information that can be extracted from a dentition produced by a model. More generally, it is very difficult to train a deep learning model only based on 3D maxillofacial structures of dentitions to generate a specific crown shape for a missing tooth in a dentition.

Hence, from the above it follows that there is a need in the art for improved methods and systems for automatic crown generation.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments in this disclosure aim to provide methods and systems for automatic generation of crown shapes based on 3D maxillofacial data comprising a dentition.

In an aspect, the embodiment, may relate to a computer-implemented method for automatic generation of a crown shape for a dentition comprising: segmenting 3D maxillofacial data comprising the dentition into a set of 3D dental objects; determining or receiving a position of a tooth, in the dentition for which a target crown shape is to be determined; determining 3D spatial constraints for the target crown shape based on the set of 3D dental objects; determining an initial pose based for the target crown shape based on one or more 3D dental objects of the set of 3D dental objects; and, optimizing one or more optimization parameters of a digital crown shape model to determine the target crown shape, the optimizing including determining a trial crown shape using the digital crown shape model and the one or more optimization parameters, computing a loss value for the trial crown shape based on the 3D spatial constraints and the initial pose; and, if the loss value does not meet one or more optimization conditions modifying the one or more shape parameters to determine a further trial crown shape and to compute a further loss value.

The method allows automatic design of a crown shape based on 3D maxillofacial data comprising the dentition. Hence, a crown shape can be designed solely based on 3D maxillofacial data comprising the dentition of a patient. Further, the method only requires optimization of a model of a crown shape, while the 3D constraints associated with the other teeth in the dentation can be processed using a loss function.

In an embodiment, the segmentation of the teeth in the 3D maxillofacial data may be based on one or more trained deep neural networks.

In an embodiment, the one or more optimization parameters may include one or more shape parameters associated with the digital crown shape model, the one or more optimization parameters being configured to control the shape of trial model generated by the digital crown shape model.

In an embodiment, the one or more optimization parameters may include one or more pose parameters for controlling the pose of the trial crown model, preferably the one or more pose parameters including parameters for controlling the rotation translation and/or scaling of the trail crown model.

In an embodiment, the 3D spatial constraints may include at least one of: a space defined by the boundaries of dental arches determined on the basis of the 3D dental objects; a closed interproximal distance (distoma) between the trial crown shape and neighbouring teeth in the dentition; no collision between the trial crown shape and neighbouring teeth in the dentition; the pose of the target crown shape is less than a threshold value of less than 0.1 millimetres, preferably 0.05 millimetres, more preferably approximately 0.02 millimetres to the pose of neighbouring teeth.

The automatic generation of a crown shape according to the embodiments in this application work on all FDI locations and not just a single posterior crown position. In addition, through extrapolation, the method also allows the generating a crown model for the last molar where a neighbour is missing. Both optical scans and CBCT scans can be used as input for generating the crowns, thus providing a flexible solution for potential clinical applications. The results are clinically relevant to help inform implant placement.

Hence, the method determines intermediate information based on 3D maxillofacial data comprising the dentition (such as segmented 3D dental objects and the tooth numbers) which is then for determining spatial constraints which are used to tune (optimize) the optimization parameters of a digital crown shape model.

In an embodiment, the modifying of the one or more optimization parameters, the determining of a trial model shape and the computing a cost value for the trial model shape is repeated until the cost value meets the one or more optimization conditions.

In an embodiment, the initial pose may be determined based on the pose of one or more 3D dental objects neighbouring the location of the tooth in the dentition for which the target crown shape is generated.

In an embodiment, the 3D spatial constraints may include a plurality of dental arches, the plurality of dental arches being determined based on the set of 3D dental objects, the plurality of dental arches forming boundaries of a 3D space in which the trial crown shape should be contained.

The 3D dental constraints may be learned from the regularity of dental positions in human anatomy. This could be manifested by any representation that can constrain the location of the crown, including but not limited to dental arches, predicted crown surface points, and/or a crown shape of a tooth that conforms to the antagonist dental arch.

In an embodiment, the digital crown shape model may define the trial crown shape as a linear combination of different basic crown shapes of a tooth, preferably the contribution of each basic crown shape to the trial crown shape being determined by a coefficient, the coefficients associated with each basic crown shape defining at least part of the one or more optimization parameters.

In an embodiment, each basic crown shape may be represented by a 3D mesh, the 3D meshes representing the basic crown shapes having the same number of points, the data format of the 3D mesh being configured so that a one-to-one correspondence exist between points of the 3D meshes.

In an embodiment, the digital crown shape model may comprise at least one trained deep neural network that is trained to generate different crown shapes as a function of one or more optimization parameters provided to the input of the trained neural network.

In an embodiment, the trained deep neural network may be configured to produce latent representation, preferably a low dimensional latent representation such as signed distance function (SDF) representation, of the trial crown shape as a function of at least one optimization parameter provided to the input of the trained neural network.

In an embodiment, the trained deep neural network may be an auto-decoder model configured to generate the low dimensional latent representation, preferably a signed distance function (SDF) representation, of the trial crown shape and wherein the at least one optimization parameter is a latent code.

In an embodiment, the method may further comprise transforming the latent representation of the trial crown shape into a mesh representation of the trial crown shape.

In an embodiment, each basic crown shape may be represented by a 3D mesh, preferably defined by vertices, edges, faces, polygons and/or surfaces, wherein each of the meshes being defined based on an equal number of faces, polygons or surfaces and wherein a locations of a landmark, such as cusp, may be represented by the same face, polygon or surface.

In an embodiment, the 3D meshes defining the basic crown shape need to have same number of points (thereby creating same number of faces, polygons or surfaces) and a dense one-to-one correspondence between the points that allows arrangement of points in same order along the meshes.

Hence, a wide range of tooth-like mesh shapes may be created from the basic crown shapes. By using the same amount of triangles and correspondence of points for each mesh shape the shapes can be combined to a large variety of dental shapes of a certain tooth type.

In a further aspect, the embodiments may relate to a system for automatic generation of a crown shape for a dentition comprising: a computer readable storage medium having computer readable program code embodied therewith; and a processor, preferably a microprocessor, coupled to the computer readable storage medium, wherein responsive to executing the computer readable program code, the processor is configured to perform executable operations comprising: segmenting 3D maxillofacial data comprising the dentition, preferably by one or more trained deep neural networks, into a set of 3D dental objects; determining or receiving a position of a tooth, preferably based on a tooth classifier, in the dentition for which a target crown shape is to be determined; determining 3D spatial constraints for the target crown shape based on the set of 3D dental objects; determining an initial pose based for the target crown shape based on one or more 3D dental objects of the set of 3D dental objects; optimizing one or more shape parameters of a digital crown shape model to determine the target crown shape, the optimizing including determining a trial crown shape using the digital crown shape model and the one or more shape parameters, computing a loss value for the trial crown shape based on the 3D spatial constraints and the initial pose; and, if the loss value does not meet one or more optimization conditions modifying the one or more shape parameters to determine a further trial crown shape and to compute a further loss value.

In an embodiment, the digital crown shape model may define the trial crown shape as a linear combination of different basic crown shapes of a tooth, wherein a contribution of each basic crown shape to the trial crown shape is determined by a coefficient, the coefficients associated with each basic crown shape defining the one or more shape parameters of the digital crown shape model.

In an embodiment, the digital crown shape model may comprise at least one trained deep neural network that is trained to generate different crown shapes as a function of a shape parameter that is provided to the input of the trained neural network; preferably the trained deep neural network being an auto-decoder which is trained to generate a signed distance function representation of a trial crown shape, the method further including: transforming the signed distance function representation of the trial crown shape into a mesh representation of the trial crown shape.

The embodiments may also relate to a computer program or suite of computer programs comprising at least one software code portion, the software code portion, when run on a computer, being configured for executing any of the method steps as described above.

Brief Description of the drawings

Fig. **1** depicts a method for determining 3D spatial constraints for automatic crown generation according to an embodiment;
Fig. **2A** and **2B** illustrate an example of a crown model comprising anatomical landmark points;
Fig. **3A** and **3B** illustrate segmented teeth of a dentition comprising anatomic landmark points;
Fig. **4A-4C** depict dental corridors which are determined based on the landmarked segmented tooth;
Fig. **5** illustrates an example of an optimization module for automatically determining according to an embodiment;
Fig. **6** illustrates an example of an optimization module for automatically determining according to an embodiment;
Fig. **7** depicts a flow chart of a method of automatic crown generation according to an embodiment;
Fig. **8A-8F** depict the evolution of a tooth shape during the optimization process according to an embodiment;
Fig. **9** is a block diagram illustrating exemplary data processing systems described in this disclosure.

Description of the embodiments

The embodiments in this disclosure generally relate to methods and systems for automatic generation of a digital representation of a crown shape for a dentition. The method for automatic crown shape generation may use 3D spatial constraints derived from 3D maxillofacial data comprising a dentition which may have at least one missing tooth for which a crown shape needs to be designed. This crown shape may be referred to as the target crown shape.

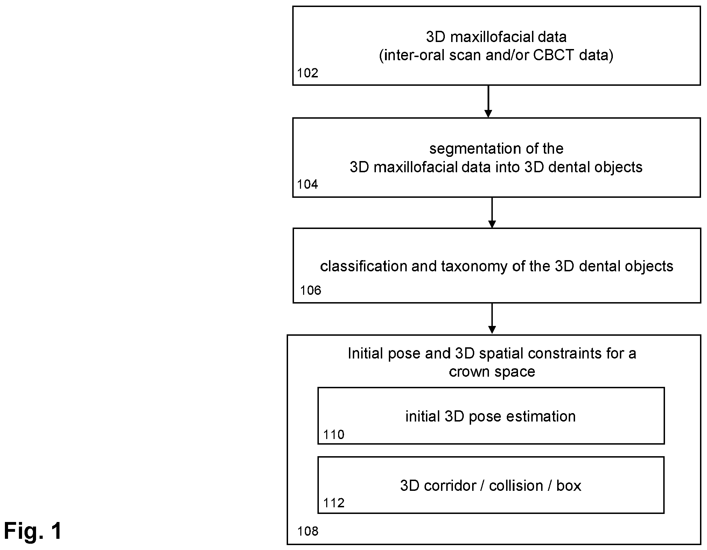

Fig. **1** depicts a method for determining 3D spatial constraints for automatic crown shape generation based on 3D maxillofacial data comprising a dentition. As shown in the figure, the method may start with receiving 3D maxillofacial data, e.g. (CB)CT data or scanning data such as intra-oral scanning IOS data, comprising a dentition (step **102).** In some embodiments, the dentition may have one or more missing teeth.

A segmentation process may be used to segment the 3D maxillofacial data comprising the dentition into individual segmented 3D dental objects (step **104),** e.g. segmented teeth. Further, the 3D dental objects may be classified into different tooth types (step **106**) and each of the 3D dental objects may be linked to a position in the 3D space of the 3D maxillofacial data. This way, a tooth type classifier, for example an FDI number, may be assigned to each of the 3D dental objects. The tooth type classifier links a 3D dental object to a certain tooth type which has a predetermined position in the dentition.

Accurate segmentation and classification of 3D maxillofacial data may be based on one or more trained neural network systems. Examples of such trained neural network systems are described in WO2021009258 and WO2019002631, which are hereby incorporated by reference in this application. Based on these segmentation and classification schemes, a set of taxonomized 3D dental objects may be determined, wherein each of the 3D dental objects is associated with a tooth type classifier. In an embodiment, based on the set of taxonomized 3D dental objects, one or more missing teeth and/or molars may be automatically determined.

Further, an initial pose and 3D spatial constraints for the target crown shape may be determined (step **108**). To that end, a library or database of basic crown shapes may be used . The library may contain for each tooth number, a plurality of different basic crown shapes. Further, each crown shape may be associated with a pose, i.e. an orientation in the 3D space in which the basic crown shapes are defined. Further, the standard crown shapes may be provided with anatomical landmark points. These landmark points are positioned on relevant locations such as a cusp, groove or equatorial point. These landmark points identify the locations of anatomical relevant parts of a basic crown shape. These landmarks may be used in determining the pose of the tooth for which a crown shape needs to be designed.

Basic crown shapes in the database associated with the tooth number of a 3D dental object may be selected and compared with the 3D dental object. The pose of the basic crown shape that provides the closest match with the crown shape of the 3D dental object may be used as an estimate for the pose for the 3D dental object. This way, the pose of all 3D dental objects may be determined.

Different matching algorithms may be used for matching the 3D dental objects. In an embodiment, an interactive closest point (ICP) algorithm may be used, In other embodiments, iterative distance minimization with an optimizer or another suitable algorithm may be used to match the crown shape of a 3D dental object with one of a set of standard crown shapes. The basic crown shape that matches a 3D dental object best, i.e. it has the closest distance to the existing tooth (lowest reproduction error), may be used to get the anatomical annotations on the 3D dental object. After matching the basic crown shape, the anatomical annotations of the basic crown shape may be transferred to the 3D dental object to form annotated 3D dental objects.

Based on the pose of the 3D dental objects that neighbour the tooth for which a target crown shape needs to be designed, an initial pose for the target crown shape may be estimated (step 110). For example, the initial pose of the target crown shape may be estimated based on an average of the poses of neighbouring teeth.

Hence, by using a matching algorithm as described above on the standard crown shapes in the database, or by using a neural network trained on such data, segmented 3D dental objects with anatomical landmark points may be obtained. Alternatively, a trained neural network can detect the location of the landmarks. This way, each 3D dental object of a dentition in the 3D maxillofacial data may be provided with anatomically relevant landmark points. Based on the anatomical landmark points, so-called dental corridors may be created, which may serve as 3D constraints for computing a cost in a crown shape optimization scheme (step 112).

In a further embodiment, 3D constraints may be obtained by training a neural network to predict sparse surface points of the crown to be designed. These sparse surface points can - for example - be used to determine a volume in which the crown shape should fit and/or to determine dental arches.

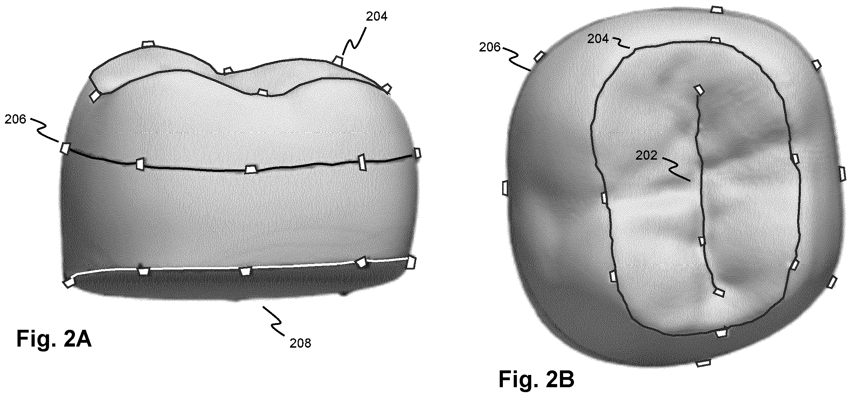

Fig. 2A and 2B illustrate an example (a side view and a top view respectively) of a plurality of standard 3D crown shapes for a predetermined tooth number. The 3D crown shapes may be represented by any suitable 3D data format including but not limited to a 3D point cloud, a 3D mesh or voxels. As shown in the figure, the crown model may include different anatomical annotations $202_{1-4}$, which define clinically relevant landmark points on the surface of the tooth. The figures illustrate anatomical annotations of a standard 3D crown shape including groove landmark points 202, cusp landmark points 204, equatorial landmark points 206 and cervical landmark points 208. Typically, these annotations are not directly available for the 3D dental objects obtained by processing 3D maxillofacial data of a patient. To provide 3D dental objects that are derived, e.g. segmented, from 3D maxillofacial data of a patient with anatomical landmark points the methods described with reference to Fig. 1 may be used.

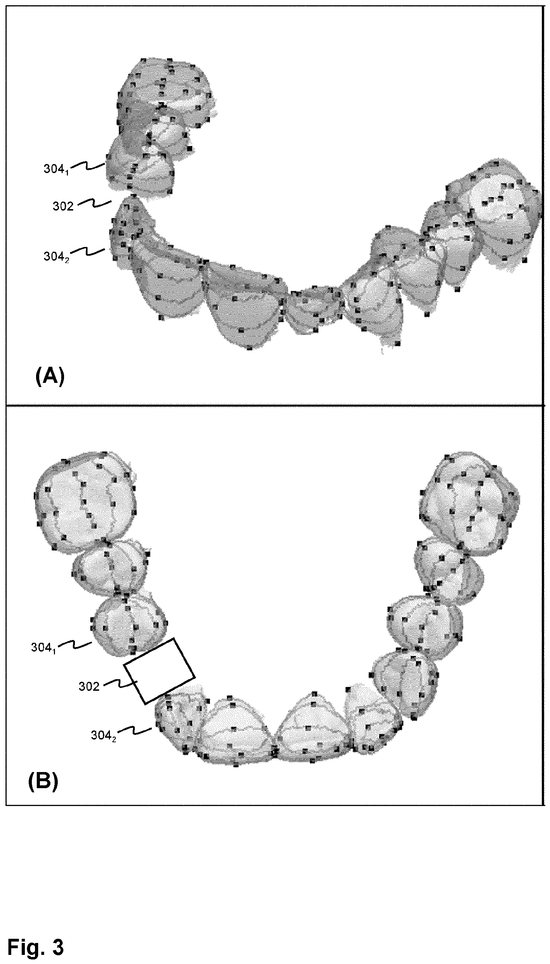

Fig. 3A and 3B show two views of a segmented dentition comprising 3D dental objects comprising anatomic landmark points according to an embodiment. The landmarked 3D dental objects may be generated using the method described with reference to Fig. 2, which includes:

1) matching the crown shape of each of the segmented 3D dental objects of the dentition to a set of annotated basic crown shapes; and,
2) transferring anatomical landmark points from a basic crown shape that matches the crown shape of a segmented 3D dental object to the 3D dental object.

As shown in the figures, one or more tooth position 302 may be identified where a tooth is missing and for which a crown shape needs to be designed. Further information that is important for the crown shape modelling are a tooth or teeth $304_{1,2}$ that is or are neighbouring a missing tooth respectively and opposing jaw with teeth (also known as antagonist in the literature). These neighbouring teeth may also define spatial constraints for the crown that needs to be designed by the model. Moreover, based on the pose of the neighbouring teeth an initial pose for the target crown shape may be determined.

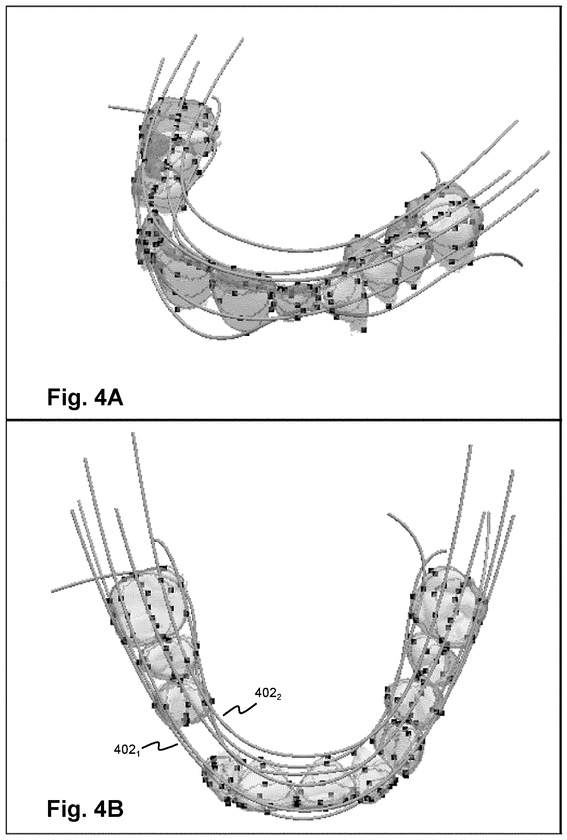

Anatomical annotations may be determined for the 3D dental objects of the dentition and one or more (typically a plurality of) dental corridors may be defined by linking identical or related anatomical landmark points of different 3D dental objects, e.g. neighbouring 3D dental objects. Fig. 4A and 4B depict different views of a plurality of dental corridors determined based on landmarked 3D dental objects of a dentition. Corridors may be defined by fitting a curve, e.g. polynomial curve, through relevant points. In an embodiment, a fitting polynomial according to the following expression may be used (equation 1):

$$F(x|a,b,c,t) = |a|(x-t)^4 + |b|(x-t)^2 + c \ (2)$$

where a, b, c, t are parameters of the polynomial model.

For example, landmark points of 3D dental objects on the outer side of the dentition may be selected. For example, the landmarks on the tooth outer cusps can be used and fitted to define an outer dental corridor $304_1$. In a similar way, landmark points of 3D dental objects on the inner side of the dentition may be selected and fitted to define an inner dental corridor $304_1$. This way a plurality of dental corridors may be generated which may define the 3D constraints that may be used in computing a 3D shape of a 3D dental object that is missing from the dentition.

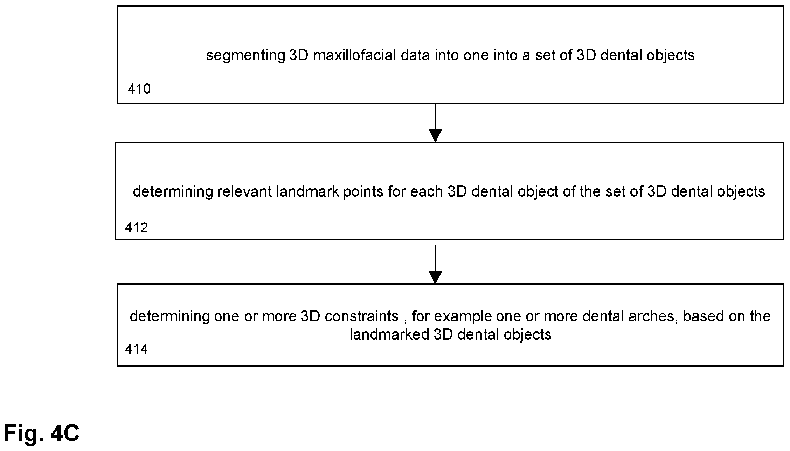

**Fig. 4C** depicts a flow chart of a process of determining 3D constraints for computing a crown shape for a dentition comprising a missing tooth. As explained above these 3D constraints are determined from 3D maxillofacial data comprising a dentition of a patient that misses one or more teeth. The process may include segmenting 3D maxillofacial data into one into a set of 3D dental objects (step **410**). The segmentation process may generate a set of segmented 3D dental objects and location information, e.g. positions of the 3D dental objects in the space of the coordinate system of the 3D maxillofacial data, e.g. CBCT data or mesh data. Then, clinically relevant landmark points may be provided for each 3D dental object of the set of 3D dental objects (step **412**). In an embodiment, a 3D dental object may be annotated with landmark points by fitting each 3D dental object to a plurality of basic crown shapes which are annotated with landmark points and using the best fitted basic crown shape to transfer the landmark point to the 3D dental object. In other embodiment, a deep neural network may be trained to receive a 3D dental object and to output landmark points for the 3D dental object. Based on the annotated 3D dental objects, 3D constraints, such as a plurality of dental arches may be determined. The landmark point may be one point or a set of points, e.g. a point cloud, associated with a 3D dental object, wherein the point or set of points indicates clinically relevant locations or areas on a 3D dental object that can be used to determine a 3D dental object.

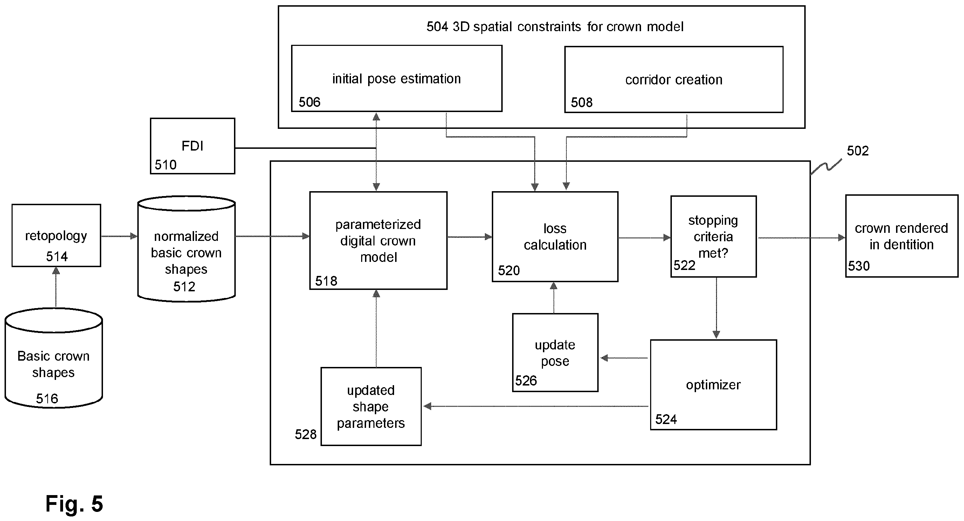

**Fig. 5** depicts an optimization module **502** for executing a method for generating a crown shape generation according to an embodiment. As shown in the figure the optimization module **502** may be configured to receive information that is needed for the optimization process. This optimization information may include an estimate of the initial pose **506** of the target crown shape and 3D constraints, such as dental corridors **508** as described with reference to **Fig. 1-4.**

The input data may further include information **510** regarding the missing tooth, such as the tooth number, which identifies the location of the tooth for which a target crown shape needs to be generated. In an embodiment, the tooth number may be determined automatically, e.g. during the segmentation of the 3D maxillofacial data as described with reference to **Fig. 1.** In another embodiment, the tooth number may be provided by a user of the system.

The system may comprise a database for storing for each tooth number of a dentition a set of standard crown shapes **512**. These sets of standard crown shapes may be used to determine the initial pose and the 3D constraints as described above with reference to **Fig. 1-4.** To ensure consistent processing of the basic crown shapes data structures may need to be normalized and standardized. To that end, a retropology technique **514** may be used to determine normalized basic crown shapes, wherein each normalized basic crown shape is represented by the same data format of a mesh shape. For example, each normalized basic crown shape may be represented by a mesh shape data format having the same number of vertices. These vertices may be represented using a two dimensional array of size N by 3 where N is total number of vertex points and where each point corresponds to the same tooth location so that the points have dense correspondence across normalised basic tooth shapes. For example, in case the basic crown shapes and the target crown shape are represented as a polygon mesh, the crown shapes may be stored and processed based on a data format that include a collection of vertices, edges and/or surfaces that define the shape of the crown. Known mesh representations may be used including but not limited to face-vertex meshes, winged-edge meshes, half-edge meshes, quad-edge meshes or corner-table meshes.

Normalized basic crown shapes belonging to the same FDI tooth position may be formed. To that end, in an embodiment, for each basic crown shape, a sphere mesh may be morphed into a crown shape that matches the basis crown shape. Each sphere mesh that is used to be shaped as a normalized basic crown shape which is represented in a data format comprising array of coordinates defining a fixed, predetermined number of vertices arranged in a predetermined order. This way, different normalized basis crown shapes of one particular tooth number can be formed. The normalized basis crown shapes comprise the same number of vertices and in the same order so that they can be combined to create a new crown shape. Every vertex coordinate of a new crown shape (a trial crown) may be formed by a linear combination of the same vertex coordinates of the normalized basic crown shapes. The linear combination weights may be selected per basic tooth shape. In that case, the weights are shared by all vertex coordinates of a basic tooth shape. The sum of all linear combination weights add up to one trial model.

The optimization module may be configured to execute an optimization scheme to determine a target crown shape that fits a crown space which is defined by the 3D constraints. The optimization scheme may be configured to optimize one or more shape parameters of a digital crown shape model **518**. The optimization scheme may start with an initial crown shape. Such initial crown shape may be generated based on the set of normalized basic crown shapes **512**. This initial crown shape may be used as a trial function in the optimization loop.

A loss function **520** may be used to compute a loss for the trial crown shape. The loss computation will be based on the initial pose and the 3D spatial constraints and the computed loss value provides a measure of how good the trial crown shape fits the space defined by the 3D spatial constraints and the initial pose. If the loss calculation indicates that the trial crown shape does not fit the crown space sufficiently well, an optimizer **524** may modify the shape parameters so that these modified shape parameters can be used by the digital crown shape model to generate a further trial crown model and to compute a further loss value. In some embodiments, in addition to the update of the shape parameters also the pose of the target may be updated by the optimizer. The optimized may use known algorithms such as stochastic gradient decent (SGD) or Adam to modify the optimization parameters. The updated pose **526** may be used in the computation of the loss value. The modification of the one or more shape parameters, the (optional) modification of the pose of the target crown shape, the determining of a trial model shape and the computing of a cost value for the trial model shape may be repeated until one or more optimization conditions are met such as early stopping criteria, maximum number of iteration or a threshold on cost value. Thereafter, the optimized target crown shape may be rendered together with the other 3D dental objects of the dentition that were derived from the 3D maxillofacial data.

Hence, the optimization scheme shown in the figure updates the shape and pose of a trial crown shape until the loss value indicates that the trial crown shape has reached an optimal shape in view of the 3D constraints, in particular the 3D dental corridors. The spatial constraints for a target crown shape may be defined based on one or more rules for example:

- the target crown shape should remain within the space that is defined by the boundaries of the dental corridors;
- a closed interproximal distance (distoma) between the target crown shape and the neighbouring teeth is needed;
- no collision between the target crown shape and neighbouring teeth may occur;
- the orientation of the target crown shape is close to the orientation of neighbouring teeth.

These rules may be implemented in the optimization scheme as loss components. One loss may be related to the tooth pose, where if it deviates too much from the initial estimation in occlusal direction it will generate a positive loss value to ensure no tooth deviation from initial occlusal direction is obtained. Another example is the constraint to remain within the dental corridors. This loss may be added to the optimization scheme as a chamfer loss, such as a soft one-way chamfer loss. Contact point losses, i.e. losses related to a trail crown shape contacts a neighbouring teeth, may be added as a point-to-point least squared error (L2) loss in the mesio-distal direction. Avoiding collision with neighbouring teeth may be added as collision loss which inflicts a penalty when the trial crown shape collides with one of its neighbouring teeth. Such loss may be computed as described in the article by Engelmann et al "From points to multi-object 3D reconstruction." Proceedings of the IEEE/CVF Conference on Computer Vision and Pattern Recognition. 2021, which is hereby incorporated by reference into this application.

Different digital crown shape models may be used in the optimization scheme of **Fig. 5.** In an embodiment, the digital crown shape model may be defined as a linear combination of normalized tooth crown shapes. Inventors found that most of the natural teeth variations are part of a subspace formed by the set of basic tooth shapes. This way, most of the natural tooth shapes can be determined based on a weighted combination of different normalized basic crown shapes of a certain tooth number. In such scheme a model based on two basic shapes would only be able to generate teeth of a shape that forms an interpolation between the two shapes. For every additional 'different' basic tooth shape, the model will become more flexible/expressive in terms of shape generation. Typically, ten or more basic tooth shapes may be determined to have variations between the shapes to fit into any denture (from worn and thin to feature rich and fat). Based on this insight, a crown shape model may be defined as a linear function of the normalised basic tooth shapes that are stored in database **516**. The normalised basic tooth shapes may be referred to as eigen tooths. This way, a linear crown shape model may define a trial crown shape $T_{designed}$ as a weighted combination of individual normalized basic crown shapes $T_i$ (equation 2):

$$T_{Designed} = \alpha_1 T_1 + \alpha_2 T_2 + ... + \alpha_n T_n$$

wherein $\alpha_i$ is a coefficient associated with the i-th normalized basic crown shape $T_i$. The coefficients associated with the normalized basic crown shapes may define the contribution of each normalized basic crown shape to a trial crown shape. This way normalized basic crown shapes can be combined to generate any natural crown shape based on the set of coefficients. The coefficient may define one or more shape parameters which can be modified and optimized based on an optimization scheme as described with reference to **Fig. 5.** The linear tooth model requires that the eigen teeth can be combined ("added") to form a resulting crown shape.

As already described above, typically, the basic teeth shapes may be defined as 3D meshes, i.e. a 3D model of polygons. The polygons that are used to model a 3D dental object are geometric shapes, such as quadrangles or triangles, which can be further broken down into vertices (defined by *x, y, z* coordinates of the coordinate system of a 3D mesh) and lines. Hence, a dense one-to-one correspondence between vertices of the meshes that represent the different crown shapes is needed to weighted combinations of normalized basic crown shapes possible. To that end, a normalization method may be used to normalize each of the 3D meshes representing a basic crown shape (as stored in a library **516**) into normalized basic crown shapes. The normalized basic crown shapes belonging to the same FDI tooth have the property that they can be combined to form different shapes based on a linear interpolation scheme.

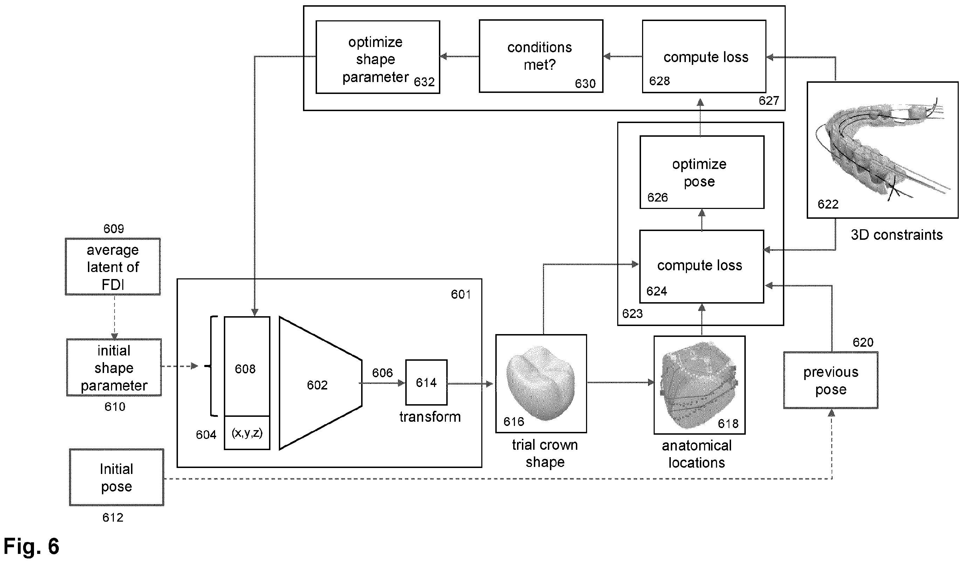

In another embodiment, the digital crown shape model may be based on a machine learning scheme, wherein a crown shape model may be optimized on the basis of a shape parameter. In this embodiment, a crown shape model may be trained to represent different crown shapes based on a shape parameter that is provided to the input of the crown shape model. An example of such optimizable crown model based on a trained deep neural network is described hereunder with reference to **Fig. 6.**

**Fig. 6** illustrates an example of an optimization module for automatically determining according to an embodiment. As shown in the figure, the module may include a machine learning model **601** configured to receive input parameters **610, 634,** in particular a shape parameter, and configured to generate an output in the form of an approximated crown shape, i.e. a trial crown shape **616,** that needs to be generated based on 3D constraints **622.** The constraints may be determined based on 3D maxillofacial data of a patient as described above with reference to **Fig. 1-4.** The crown shape may be represented using a digital data format for 3D models such as a mesh format.

The module may be configured to generate a crown shape by using the shape parameter and, optionally, the pose of the tooth for which the crown shape needs to be generated as optimization parameters. To that end, the module may be configured to receive initial optimization parameters, such as an initial shape parameter **610** and an initial pose **612.** A pose optimizer **623** may be configured to receive a trial crown shape **606** generated by the machine learning model. The trial crown shape **616,** the pose **620** (either the initial pose or an updated pose) and the 3D constraints **622** may be used by a first loss function **624** to compute a first loss value. In some embodiments, before provided to the pose optimizer, the trial crown shape may be provided with anatomic landmarks **618** in a similar way as described above with reference to **Fig. 1-4.** The computed first loss value may be used by a first optimization algorithm **626** to determine a trial crown shape with an updated pose. This updated trial crown shape may be provided to a shape optimizer **627** comprising a second loss function **628** which is configured to compute a loss value based on the updated trial crown shape and the 3D constraints **622.** The second loss value may be used to determine if one or more optimization conditions **630** are met. If this is not the case, the second loss value may be used to determine one or more new shape parameters **632,** which may be provided to the input of the machine learning model to determine a new trial crown shape. This process may be repeated a number of times until at least one of the one or more optimization conditions is met.

It is submitted that the optimization scheme illustrated in **Fig. 6** is a nonlimiting example and many different implementation may be possible without departing from the teaching of the embodiments. For example, the pose optimizer and the shape optimizer may be implemented in one optimization module in which a loss function is used to compute one or more loss values is computed which may include a loss part for the pose and a loss part for the shape and an algorithm that may compute an updated pose and shape parameters using the 3D constraints. Here, the loss function may be configured to compute collision losses, which provide a measure for the extent to which a trial crown shape positioned at a location in the dentition overlaps with neighbouring tooth; corridor losses, which provide a measure for the extent to which a trial crown shape positioned at a location in the dentition is within the boundaries of a 3D space defined by dental arches. For example, collisions losses may be computed based on point-to-surface distance as described in the article of Engelmann et al, From points to multi-object 3D reconstruction, https://arxiv.org/abs/2012.11575v3, which is hereby incorporated by reference into this application. Similarly, corridor losses may be computed based on the distance between anatomical landmarks of the trial crown shape to the lines defining the different dental arches.

Different machine learning models may be used in the scheme as illustrated in **Fig. 6.** These machine learning models have in common that they are trained to produce a trial crown shape based on one or more shape parameters that may be provided to the input of the machine learning model and that they are associated with a loss function that may compute a loss value that provides a measure how well a trial crown shape meets the 3D constraints.

In an embodiment, the machine learning model may use a so-called signed distance function as a 3D shape description for crown shapes. In an embodiment, the machine learning model may be as a so-called auto-decoder model, which is trained for crown shapes in a low dimensional latent space in which many crown shapes can be efficiently embedded. For example, in an embodiment, a continuous signed distance function (SDF) may be used to represent classes of crown shapes. An SDF may represent a surface of a crown shape by a continuous volumetric field in which a point in the field represents a distance to the surface boundary wherein the sign indicates whether the region is inside or outside of the chape. An example of such auto-decoder model is described in the article by Jeong Joon Park et. Al, DeepSDF: learning continuous signed distance functions for shape representation, https://arxiv.org/abs/1901.05103 which is hereby incorporated by reference in this application. Various other SDF based machine learning models for efficiently generating crown shapes may be used including but not limited to the Local Geometry Code Learning (LGCL) model as described in the article by Yao et al, 3D Shapes Local Geometry Codes Learning with SDF, arXiv:2108.08593, or the Deep Local Shapes (DeepLS) model as described in the article by Chabra et al, Deep Local Shapes: Learning Local SDF Priors for Detailed 3D Reconstruction, arXiv:2003.10983 which both improve the DeepSDF model by learning from a local shape geometry of the full 3D shape. A further SDF model that may be used is described in the article by Mu et al, A-SDF, Learning Disentangled Signed Distance Functions for Articulated Shape Representation arXiv:2104.07645. The content of these articles are herewith incorporated by reference into this application.

To train the auto-decoder model a set of latent codes may be linked with different training crown shapes (represented in SDF format). This way, the auto-decoder will learn to generate different SDF-encoded crown shapes for different latent codes **608** at the input. The model may comprise a fully connected network having a input **604** for receiving coordinates (x,y,z) of a crown shape and an input **608** for receiving a latent code associated with the crown shape. During training the network computes estimated SDF values associated with the coordinates and a loss function is used to penalize deviations of the prediction of the SDF values by the network from the actual SDF values of a target. During inference, the trained auto-decoder model will provide a crown shape in encoded form, for example a set of SDF values, in response to a latent code (a vector) that is provided to the input of the auto-encoder model.

Once trained the auto-encoder model may be used to generate a crown shape using the latent code as a shape optimization parameter. Thus, starting with an initial latent code (an initial shape parameter) provided to the input of the auto-decoder model a set of SDF values representing a trial crown shape (an SDF encoded train crown shape) will be provided at the output of the model. The trial crown shape is an estimate of crown shape that is associated with the initial latent code. In an embodiment, the initial latent code may be determined based on an average value of the latent codes of a set of crown shapes of a certain tooth type (e.g. FDI). In an embodiment, the set of basic crown shapes as described above may be used for determining such average value.

To compute losses based on the crown shape in the real space, the SDF-encode trail crown shape may be transformed using a suitable transformation algorithm **614** into a mesh representation of a crown shape. For example, in an embodiment, the MeshSDF algorithm may be use to transform an SDF representation of the crown shape to a mesh representation of a crown shape. The MeshSDF algorithm is described in the article by Remelli et al, MeshSDF: differential iso-surface extraction, arXiv:2006.03997, which is hereby incorporated by references. This crown shape may then be used as the trial crown shape that is optimized using the optimization process as depicted in **Fig. 6.** For example, a marching cubes algorithm may be used to transform the SDF representation of the crown shape into a mesh representation of the trial crown shape **616.** The coded auto-decoder model provides an efficient way of encoding a plurality of different crown shapes represented by points in the real space into a low dimensional latent space. It is noted that the embodiments are not limited to the model as illustrated in **Fig. 6** other models that are suitable for the shape optimization scheme of **Fig. 5** and **6.**

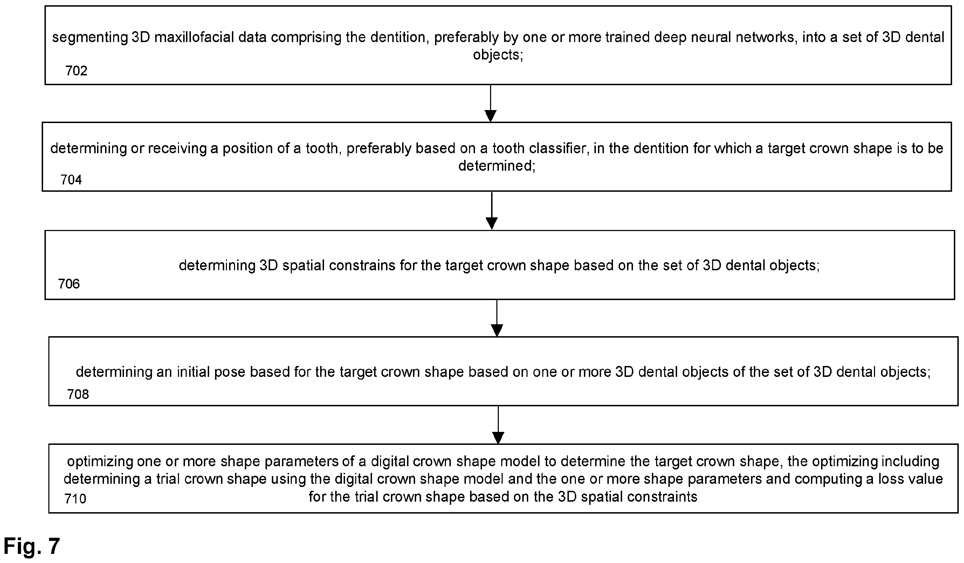

Hence, as explained above, the embodiments relate to a computer-implemented method for automatic generation of a crown shape for a dentition. This method is illustrated in the flow diagram of **Fig. 7**. The method may include the steps of segmenting 3D maxillofacial data comprising the dentition, preferably by one or more trained deep neural networks, into a set of 3D dental objects (step **702**). In a further step, a position of a tooth in the dentition for which a target crown shape is to be determined may be received or determined (step **704**). Further, in step **706** 3D spatial constraints for the target crown shape may be determined based on the set of 3D dental objects. An initial pose based for the target crown shape may be determined based on one or more 3D dental objects of the set of 3D dental objects (step **708**). Then, one or more shape parameters of a digital crown shape model may be optimized to determine the target crown shape. Here, the optimizing may include determining a trial crown shape using the digital crown shape model and the one or more shape parameters, computing a loss value for the trial crown shape based on the 3D spatial constraints and the initial pose (step 710). If the loss value does not meet one or more optimization conditions modifying the one or more shape parameters to determine a further trial crown shape and to compute a further loss value (step **712**). The method allows automatic design of a crown shape based on 3D maxillofacial data comprising the dentition. Only a model of a crown shape needs to be optimized, while the 3D constraints associated with the other teeth in the dentation can be processed using a loss function.

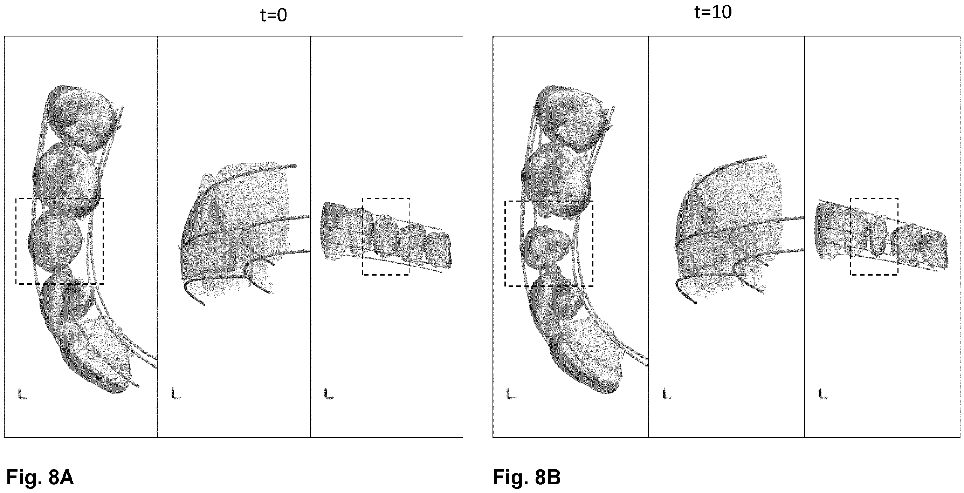

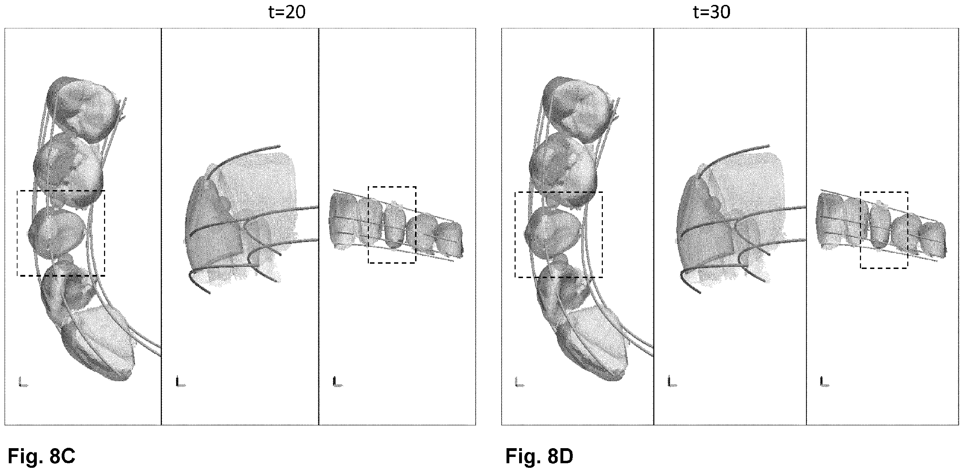

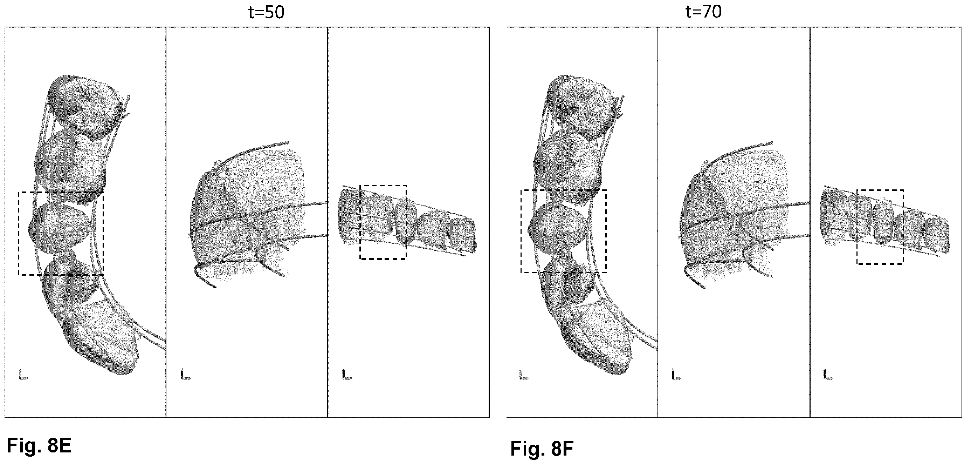

**Fig. 8A-8F** depict the evolution of a tooth shape during the optimization process according to an embodiment. **Fig. 8A** depicts part of a dentition comprising teeth of a patient and (in the dotted box) a tooth that needs to be modelled. As shown in this figure, the first trial crown shape shows some overlap with neighbouring teeth as well as part of the 3D dental arches. Based computed loss value this trial box model will be disapproved and a further optimization round is needed. **Fig. 8B** show the trial function of the next round. As shown in this picture, the dimensions of the crown shape are substantially reduced, however in this case a little too much as there is large space between the crown mode and the neighbouring teeth. This process may be repeated several times (**Fig. 8C-8E**), each time producing a different crown shape that provide lower loss values unit an optimization condition, e.g. no significant decrease in the loss value, is met (following the scheme as described with reference to **Fig. 5**). The end results in **Fig. 8F** is a crown shape that optimally fits in the space between the teeth taken into account the 3D constraints derived from the other teeth of the dentition.

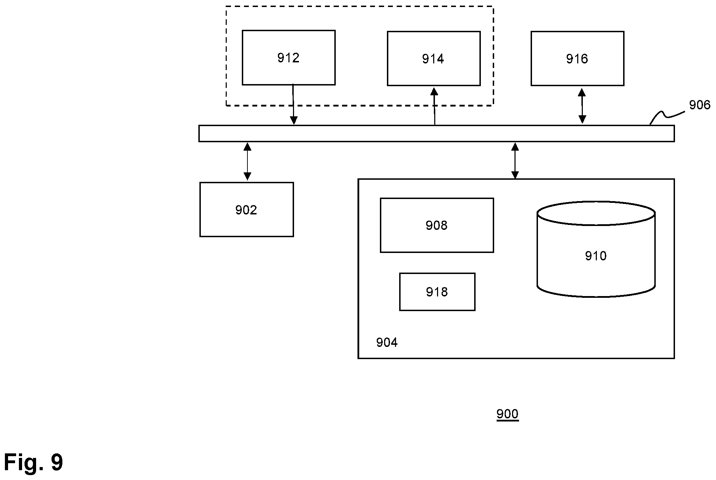

**Fig. 9** is a block diagram illustrating exemplary data processing systems described in this disclosure. Data processing system **900** may include at least one processor **902** coupled to memory elements **904** through a system bus **906.** As such, the data processing system may store program code within memory elements **904.** Further, processor **902** may execute the program code accessed from memory elements **904** via system bus **906.** In one aspect, data processing system may be implemented as a computer that is suitable for storing and/or executing program code. It should be appreciated, however, that data processing system **900** may be implemented in the form of any system including a processor and memory that is capable of performing the functions described within this specification.

Memory elements **904** may include one or more physical memory devices such as, for example, local memory **908** and one or more bulk storage devices **910.** Local memory may refer to random access memory or other non-persistent memory device(s) generally used during actual execution of the program code. A bulk storage device may be implemented as a hard drive or other persistent data storage device. The processing system **900** may also include one or more cache memories (not shown) that provide temporary storage of at least some program code in order to reduce the number of times program code must be retrieved from bulk storage device **910** during execution.

Input/output (I/O) devices depicted as key device **912** and output device **914** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **916** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with data processing system **900.**

As pictured in **FIG. 9,** memory elements **904** may store an application **918**. It should be appreciated that data processing system **900** may further execute an operating system (not shown) that can facilitate execution of the application. Application, being implemented in the form of executable program code, can be executed by data processing system **900,** e.g., by processor **902.** Responsive to executing application, data processing system may be configured to perform one or more operations to be described herein in further detail.

In one aspect, for example, data processing system **900** may represent a client data processing system. In that case, application **918** may represent a client application that, when executed, configures data processing system **900** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **918,** when executed, may configure data processing system to perform (HTTP) server operations. In another aspect, data processing system may represent a module, unit or function as referred to in this specification.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Computer-implemented method for automatic generation of a crown shape for a dentition comprising:

   segmenting 3D maxillofacial data comprising the dentition, preferably by one or more trained deep neural networks, into a set of 3D dental objects;
   determining or receiving a position of a tooth, preferably based on a tooth classifier, in the dentition for which a target crown shape is to be determined;
   determining 3D spatial constraints for the target crown shape based on the set of 3D dental objects;
   determining an initial pose based for the target crown shape based on one or more 3D dental objects of the set of 3D dental objects;
   optimizing one or more optimization parameters associated with a digital crown shape model to determine the target crown shape, the optimizing including determining a trial crown shape using the digital crown shape model and the one or more optimization parameters, computing a loss value for the trial crown shape based on the 3D spatial constraints and the initial pose; and, if the loss value does not meet one or more optimization conditions modifying the one or more optimization parameters to determine a further trial crown shape and to compute a further loss value.

2. Method according to claim 1 wherein the modifying of the one or more optimization parameters, the determining of a trial model shape and the computing a cost value for the trial model shape is repeated until the cost value meets the one or more optimization conditions.

3. Method according to claims 1 or 2 wherein the one or more optimization parameters include one or more shape parameters associated with the digital crown shape model, the one or more shape parameters being configured to control the shape of trial model shape generated by the digital crown shape model.

4. Method according to any of claims 1-3 wherein the one or more optimization parameters include one or more pose parameters for controlling the pose of the trial crown model, preferably the one or more pose parameters including parameters for controlling the rotation translation and/or scaling of the trail crown model.

5. Method according to any of claims 1-4 wherein the initial pose is determined based on the pose of one or more 3D dental objects neighbouring the location of the tooth in the dentition for which the target crown shape is generated.

6. Method according to any of claims 1-5 wherein the 3D spatial constraints include at least one of:

   a space defined by the boundaries of dental arches determined on the basis of the 3D dental objects;
   a closed interproximal distance (distoma) between the trial crown shape and neighbouring teeth in the dentition;
   no collision between the trial crown shape and neighbouring teeth in the dentition;
   the pose of the target crown shape is close to a set threshold to the pose of neighbouring teeth.

7. Method according to to claim 6 wherein the dental arches are determined based on clinically relevant landmark points on the surfaces of the 3D dental objects.

8. Method according to any of claims 1-6 wherein the digital crown shape model defines the trial crown shape as a linear combination of different basic crown shapes of a tooth, preferably the contribution of each basic crown shape to the trial crown shape being determined by a coefficient, the coefficients associated with each basic crown shape defining at least part of the one or more optimization parameters.

9. Method according to claim 8 wherein each basic crown shape is represented by a 3D mesh, the 3D meshes representing the basic crown shapes having the same number of points, the data format of the 3D mesh being configured so that a one-to-one correspondence exist between points of the 3D meshes.

10. Method according to any of claims 1-5 wherein the digital crown shape model comprises at least one trained deep neural network that is trained to generate different crown shapes as a function of one or more optimization parameters provided to the input of the trained neural network.

11. Method according to claim 10 wherein the trained deep neural network is configured to produce latent representation, preferably a low dimensional latent representation, such as a signed distance function (SDF) representation, of the trial crown shape as a function of at least one optimization parameter provided to the input of the trained neural network.

12. Method according to claims 10 or 11 wherein the trained deep neural network is an auto-decoder model configured to generate the low dimensional latent representation, preferably a signed distance function (SDF) representation, of the trial crown shape and wherein the at least one optimization parameter is a latent code.

13. Method according to claims 11 or 12, further comprising:
transforming the latent representation of the trial crown shape into a mesh representation of the trial crown shape.

14. System for automatic generation of a crown shape for a dentition comprising:
a computer readable storage medium having computer readable program code embodied therewith; and a processor, preferably a microprocessor, coupled to the computer readable storage medium, wherein responsive to executing the computer readable program code, the processor is configured to perform executable operations comprising:

segmenting 3D maxillofacial data comprising the dentition, preferably by one or more trained deep neural networks, into a set of 3D dental objects;
determining or receiving a position of a tooth, preferably based on a tooth classifier, in the dentition for which a target crown shape is to be determined;
determining 3D spatial constraints for the target crown shape based on the set of 3D dental objects;
determining an initial pose based for the target crown shape based on one or more 3D dental objects of the set of 3D dental objects;
optimizing one or more optimization parameters associated with a digital crown shape model to determine the target crown shape, the optimizing including determining a trial crown shape using the digital crown shape model and the one or more optimization parameters, computing a loss value for the trial crown shape based on the 3D spatial constraints and the initial pose; and, if the loss value does not meet one or more optimization conditions modifying the one or more optimization parameters to determine a further trial crown shape and to compute a further loss value.

15. System according to claim 14 wherein the digital crown shape model defines the trial crown shape as a linear combination of different basic crown shapes of a tooth, preferably the contribution of each basic crown shape to the trial crown shape being determined by a coefficient, the coefficients associated with each basic crown shape defining at least part of the one or more optimization parameters.

16. System according to claim 14 wherein the digital crown shape model comprises at least one trained deep neural network that is trained to generate different crown shapes as a function of one or more optimization parameters provided to the input of the trained neural network.

17. A computer program or suite of computer programs comprising at least one software code portion the software code portion, when run on a computer, being configured for executing the method steps according any of claims 1-12.

**Fig. 1**

```
┌─────────────────────────────────────────────┐
│           3D maxillofacial data              │
│       (inter-oral scan and/or CBCT data)     │
│ 102                                          │
└─────────────────────────────────────────────┘
                        │
                        ▼
┌─────────────────────────────────────────────┐
│             segmentation of the              │
│    3D maxillofacial data into 3D dental      │
│                 objects                      │
│ 104                                          │
└─────────────────────────────────────────────┘
                        │
                        ▼
┌─────────────────────────────────────────────┐
│ classification and taxonomy of the 3D dental │
│                  objects                     │
│ 106                                          │
└─────────────────────────────────────────────┘
                        │
                        ▼
┌─────────────────────────────────────────────┐
│    Initial pose and 3D spatial constraints   │
│              for a crown space               │
│   ┌───────────────────────────────────────┐  │
│   │        initial 3D pose estimation     │  │
│   │ 110                                   │  │
│   └───────────────────────────────────────┘  │
│   ┌───────────────────────────────────────┐  │
│   │       3D corridor / collision / box   │  │
│   │ 112                                   │  │
│   └───────────────────────────────────────┘  │
│ 108                                          │
└─────────────────────────────────────────────┘
```

**Fig. 2B**

**Fig. 2A**

**Fig. 3**

**Fig. 4A**

402₂

402₁

**Fig. 4B**

segmenting 3D maxillofacial data into one into a set of 3D dental objects

410

determining relevant landmark points for each 3D dental object of the set of 3D dental objects

412

determining one or more 3D constraints , for example one or more dental arches, based on the landmarked 3D dental objects

414

**Fig. 4C**

Fig. 5

Fig. 6

609 average latent of FDI
610 initial shape parameter
612 Initial pose

601
604 | 608 | (x,y,z)
602
606
614 transform
616 trial crown shape
618 anatomical locations
620 previous pose

623
624 compute loss
626 optimize pose
622 3D constraints

627
628 compute loss
630 conditions met?
632 optimize shape parameter

EP 4 494 596 A1

segmenting 3D maxillofacial data comprising the dentition, preferably by one or more trained deep neural networks, into a set of 3D dental objects;
702

determining or receiving a position of a tooth, preferably based on a tooth classifier, in the dentition for which a target crown shape is to be determined;
704

determining 3D spatial constrains for the target crown shape based on the set of 3D dental objects;
706

determining an initial pose based for the target crown shape based on one or more 3D dental objects of the set of 3D dental objects;
708

optimizing one or more shape parameters of a digital crown shape model to determine the target crown shape, the optimizing including determining a trial crown shape using the digital crown shape model and the one or more shape parameters and computing a loss value for the trial crown shape based on the 3D spatial constraints
710

Fig. 7

t=10

Fig. 8B

t=0

Fig. 8A

t=30

Fig. 8D

t=20

Fig. 8C

Fig. 8F

Fig. 8E

t=70

t=50

Fig. 9

| Europäisches Patentamt European Patent Office Office européen des brevets | **EUROPEAN SEARCH REPORT** | Application Number EP 23 18 6237 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|----------|-------------------------------------------------------------------------------|-------------------|------------------------------------------|
| A | US 2019/147666 A1 (KEUSTERMANS JOHANNES [BE] ET AL) 16 May 2019 (2019-05-16) * paragraphs [0001], [0012], [0014], [0016] – [0025], [0033], [0050], [0064], [0237], [0241], [0257], [0260] * ----- | 1–17 | INV. A61C5/77 A61C13/00 ADD. A61C13/08 |
| A,D | US 2022/296344 A1 (LEE JINHO [US] ET AL) 22 September 2022 (2022-09-22) * the whole document * ----- | 1–17 | |

| | TECHNICAL FIELDS SEARCHED (IPC) |
| | A61C |

The present search report has been drawn up for all claims

| Place of search | Date of completion of the search | Examiner |
|-----------------|----------------------------------|----------|
| Munich | 13 December 2023 | Kerner, Bodo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 494 596 A1

## ANNEX TO THE EUROPEAN SEARCH REPORT
## ON EUROPEAN PATENT APPLICATION NO.

EP 23 18 6237

This annex lists the patent family members relating to the patent documents cited in  the above-mentioned European search report.
The members are as contained in the European Patent Office EDP file on
The European Patent Office is in no way liable for these particulars which are merely given for the purpose of information.

13-12-2023

| Patent document cited in search report | Publication date | Patent family member(s) | | Publication date |
|---|---|---|---|---|
| US 2019147666 A1 | 16-05-2019 | AU | 2017281290 A1 | 06-12-2018 |
| | | BR | 112018075825 A2 | 19-03-2019 |
| | | CA | 3024372 A1 | 28-12-2017 |
| | | CN | 109310488 A | 05-02-2019 |
| | | EP | 3471657 A1 | 24-04-2019 |
| | | JP | 7110120 B2 | 01-08-2022 |
| | | JP | 2019518552 A | 04-07-2019 |
| | | KR | 20190020756 A | 04-03-2019 |
| | | US | 2019147666 A1 | 16-05-2019 |
| | | WO | 2017220619 A1 | 28-12-2017 |
| | | ZA | 201807696 B | 28-04-2022 |
| US 2022296344 A1 | 22-09-2022 | AU | 2020341455 A1 | 10-03-2022 |
| | | BR | 112022002448 A2 | 03-05-2022 |
| | | CN | 114342002 A | 12-04-2022 |
| | | EP | 4025156 A1 | 13-07-2022 |
| | | JP | 2022547857 A | 16-11-2022 |
| | | KR | 20220056234 A | 04-05-2022 |
| | | US | 2022296344 A1 | 22-09-2022 |
| | | WO | 2021046147 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220296344 A
- WO 2022016294 A
- WO 2021009258 A
- WO 2019002631 A

**Non-patent literature cited in the description**

- **ENGELMANN et al.** From points to multi-object 3D reconstruction.. *Proceedings of the IEEE/CVF Conference on Computer Vision and Pattern Recognition*, 2021
- **ENGELMANN et al.** *From points to multi-object 3D reconstruction*, https://arxiv.org/abs/2012.11575v3
- **JEONG JOON PARK**. *DeepSDF: learning continuous signed distance functions for shape representation*, https://arxiv.org/abs/1901.05103
- **YAO et al.** 3D Shapes Local Geometry Codes Learning with SDF. *arXiv:2108.08593*
- **CHABRA et al.** Deep Local Shapes: Learning Local SDF Priors for Detailed 3D Reconstruction. *arXiv:2003.10983*
- **MU et al.** A-SDF, Learning Disentangled Signed Distance Functions for Articulated Shape Representation. *arXiv:2104.07645*
- **REMELLI et al.** MeshSDF: differential iso-surface extraction. *arXiv:2006.03997*